# EUROPEAN PATENT SPECIFICATION

(11) **EP 3 892 479 B1**
(45) Date of publication and mention of the grant of the patent: **19.01.2022**
(21) Application number: 21153789.9
(22) Date of filing: 27.01.2021
(51) Int. Cl.: B60C 27/06, B60C 27/12

(54) **ANTI-SKID DEVICE FOR WHEELS**
ANTIRUTSCHVORRICHTUNG FÜR RÄDER
DISPOSITIF ANTI-DÉRAPAGE POUR ROUES

(30) Priority: 06.04.2020 IT 202000007273
(43) Date of publication of application: 13.10.2021
(73) Proprietor: KÖNIG S.P.A, 23867 Suello (LC) (IT)
(72) Inventor: NECCHI, Stefano, 23874 Montevecchia (Lecco) (IT); BARONE, Natan, 23900 Lecco (IT)
(74) Representative: Petruzziello, Aldo

(56) References cited:
- WO-A1-2004/035332
- FR-A- 522 878
- JP-A- 2006 044 639
- US-A- 1 336 363
- US-A- 1 912 481

## Description

The present invention relates to an anti-skid device, such as a snow chain mountable on a wheel of a vehicle. More particularly, the anti-skid device according to the invention has features that allow facilitated mounting and dismantling on the wheel.

### Background of the invention

When a vehicle is on a road surface covered by snow, sleet or ice, its tyres do not have a good grip and dangerous skidding and sliding of the vehicle can occur. To avoid these problems, it is common to use anti-skid devices, commonly called snow chains. Snow chains, normally fitted on the vehicle's driving wheels, cutting into the snow and/or ice deposited on the road surface, increase friction on the tread of the tyres and allow a good hold of the vehicle's tyres.

A traditional snow chain generally consists of two lateral elements (chains, flexible cables, steel wires, ropes or the like), which in use conditions are closed in a ring on the inner side and on the outer side of the wheel respectively, and which here below will be called the inner and outer ring respectively. These lateral elements are connected by a series of chain sections, variously arranged, to achieve friction on the tread, the whole being completed by a device for tensioning said elements, known by the name of tensioner.

The chain sections arranged on the tread generally have a rhomboid configuration, with elements arranged diagonally to provide grip in both longitudinal and transverse directions.

In the prior art, older anti-skid devices did not provide for the use of tensioners. FR522878A, for example, describes a device formed by a single metal ring element, in a single piece or in two arcs, which is arranged on the inner side of the tyre, and by a series of chain sections connected thereto.

US 1336363, also lacking a tensioner, describes an anti-skid device comprising two ring elements to be applied onto the sides of the wheels and a plurality of chain sections arranged on either side of the ring elements so that, once in operation, the chain sections cover the tread of the tyre of the wheel to which the device is applied. In this document, which is more than a hundred years old, the ring elements are rigid and provide for complicated assembly, however effective for the time. The arc elements are joined together and attached to the wheel by four bolts placed at 90° from each other and extend between the wheel spokes.

WO2004/035332 A1 provides a folding anti-skid device for car tyres. The device, when installed around a tyre, is formed by two ring elements and is provided with a plurality of anti-skid pads that are arranged on the tread at regular intervals. The two ring elements in this case are formed by a series of segments hinged together and have, at staggered intervals, connectors to connect the snow pads, forming in this way a folding 'accordion' anti-skid device.

Traditionally known snow chains are generally fitted by placing the chain on the wheel, subsequently turning the wheel by moving the vehicle and then repositioning the snow chain and securing it around the wheel.

For some time now, the historically known solutions have been improved to allow automatic mounting of the chain. This mounting generally takes place by using spring elements and tensioning systems applied to the chain components, which can be preloaded with a pre-determined force. When the wheel turns, after the chain has been fitted in a first position, the spring element places the chain parts under tension, thus securing it onto the wheel.

An embodiment of a snow chain designed to allow automatic assembly is described, for example, in European patent publication EP2489528B 1. In this document an anti-skid device is described comprising a fixing element suitable for being positioned substantially on one side of a wheel of a vehicle. The fixing element is in the form of two semi-arcs held together by an extendable element, generally a cable inserted therein, i.e., made to enter from a first end of the first semi-arc and made to exit from a second end of the second semi-arc.

In this configuration, the fixing element comprises an open area or gap between the other ends of the two semi-arcs, which nevertheless remain connected by the passage of the extendable cable. The ends of the cable, exiting the unconnected ends of the two semi-arcs, are directed, by means of a bypass or bridge element arranged transversely to the fixing element and designed to cover the width of the tread, towards one end of a tensioning device in elongated form. At the other end of the tensioning device a mesh of chain sections is attached, which in turn is connected in various points of the fixing element to semi-arcs.

Thanks to the presence of the extendable cable and its double arc composition, the fixing element can be widened during assembly in such a way as to be fitted on the inner side of the wheel (i.e., the side directed towards the centre of the vehicle), with the cable that remains at the outer side, where the tensioning device is also located.

This tensioning device is designed to impart a force to the extended element and allows the anti-skid device to move from a position wherein it is almost mounted, before the vehicle is started, with the extendable element in an extended condition, to a position wherein it is ready for use, after starting, with the extendable element tensioned so as to bring the ends of the half-arcs which had previously been moved apart closer together and fix the fixing element on the inner side of the wheel. In this way the anti-skid device has a self-assembling function.

Snow chains such as those described, although integrating a self-assembly function, still have several disadvantages, among which the presence of inconvenient tensioning elements, which remain visible and which are applied causing interference with structural parts of the wheel, with the consequence of causing damage to elements such as rims, a situation which is very irksome in the case of alloy rims. This is mainly due to the fact that the fixing element on the outer side of the wheel consists of chain sections which require the aforementioned tensioning elements and which themselves go to rub against the rim.

Furthermore, many of the self-assembling devices have tensioning devices which are not readily usable, which sometimes require the application of considerable forces, sometimes also requiring the use of feet, which may create problems in maintaining uniform tension on the wheel fixing elements.

### Summary of the invention

The object of the present invention is therefore to provide an anti-skid device for wheels which allows the disadvantages of the prior art to be overcome.

More particularly, an object of the present invention is to provide an anti-skid device which makes the operations of mounting and dismantling on vehicle wheels simpler, with uniform tensioning of the fixing components.

Another object of the present invention is to provide an anti-skid device that is flexible, light to transport and economical.

A further object is to provide an anti-skid device which does not detract from the aesthetic appearance of the wheel to which it is applied, and which reduces to a minimum contacts with the structural parts of the wheel, more particularly the rim.

These and other objects are achieved by an anti-skid device according to the invention having the features listed in the appended independent claim 1.

Advantageous embodiments of the invention are disclosed by the dependent claims.

Substantially, the present invention relates to an anti-skid device for a wheel of a vehicle, comprising a first arc-shaped element suitable for being mounted at a first side of said wheel, whose ends define a first gap; a second arc-shaped element suitable for being mounted at a second side of said wheel, whose ends define a second gap; a bridge element suitable for connecting said first and second arc-shaped elements in such a way as to distance them on planes substantially parallel one to the other, with the gaps arranged substantially with identical radial orientation; an anti-skid element between the first and second arc elements suitable, in the mounted device condition, for being arranged on the surface of the tread of said wheel; wherein the arrangement of said bridge element divides the first arc element into a first branch and a second branch and said second arc element into a first branch and into a second branch and there is provided an extendable cable having a first and a second end; the first end of said cable is fixed in a point of the first branch of the first arc element; the cable passes beyond the first gap, follows the whole length of the second branch of the first arc element and via said bridge element reaches the second arc element; it runs along the whole length of the second branch of the second arc element, goes beyond the second gap and reaches a tensioning device provided in a position of the second branch, to which it is fixed with its second end; said tensioning device being capable of tensioning the extendable cable once the anti-skid device has been mounted on the wheel, reducing said first and second gaps in order to fix said arc elements on the inner and outer sides of the wheel, being arranged on the tyre sides.

### Brief description of the drawings

Further features of the invention will be made clearer by the following detailed description, referring to a purely illustrative, and therefore non-limiting, example embodiment thereof illustrated in the accompanying drawings, in which:
Figure 1 is a schematic axonometric view of an anti-skid device according to the present invention;
Figure 2 is an exploded view showing the components of a tensioning device applied to the anti-skid device; and
Figures 3 to 8 show the steps of a sequence of fitting of an anti-skid device according to the present invention to a wheel.

### Detailed description of preferred embodiments

A preferred embodiment of the anti-skid device according to the present invention will now be described in detail with reference to the accompanying drawings.

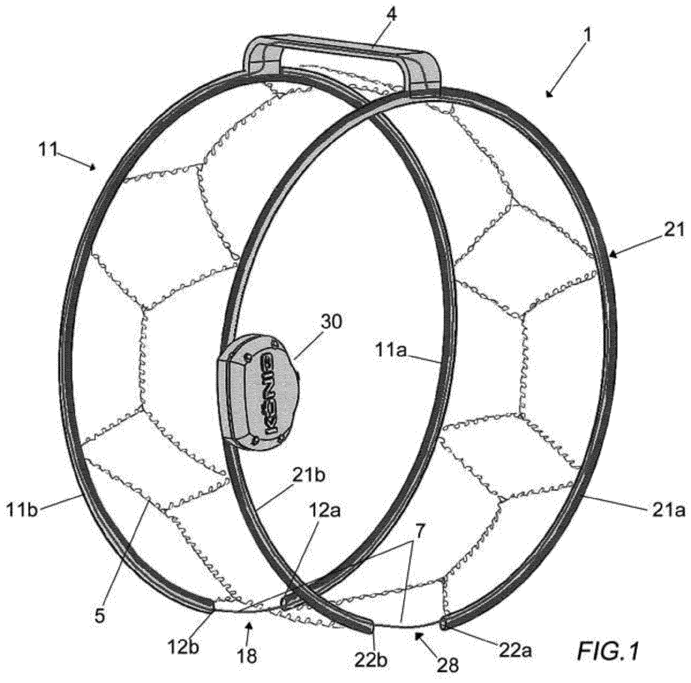

Fig. 1 shows a schematic representation of an anti-skid device, denoted as a whole by reference numeral 1, when it is not applied to a wheel. The anti-skid device 1 is formed substantially by a first arc fixing element 11 and a second arc fixing element 21, joined by a bridge element 4.

The arc fixing elements 11 and 21 are suitable, once mounted, to be arranged on the inner and outer sides of the wheel respectively, resting on the tyre sides. A series of chain sections, forming a mesh 5, are arranged between the arc elements 11 and 21, so as to cover the tread surface when the device 1 is mounted on a wheel.

The arc elements 11, 21 have the feature of allowing a certain degree of flexibility: by exerting a moving away force on the ends, the arc element can be widened, and then return to the normal condition once the stress has ended. The bridge element 4, in addition to allowing the two arc elements 11, 21 to be joined, also allows them to be kept distanced on two substantially parallel planes, at a distance equal to the width of the tread of the wheel on which the device 1 is to be mounted.

The first arc element 11 terminates in two ends 12a, 12b delimiting a first gap 18. Similarly, the second arc element 21 terminates in two ends 22a, 22b delimiting a second gap 28. Furthermore, the providing of the bridge element 4 effectively divides the first arc element 11 into a first branch 11a and into a second branch 11b and, in the same way, divides the second arc element 21 into a first branch 21a and into a second branch 21b. In the preferred embodiment, the two gaps 18, 28 are at an almost identical radial orientation.

The arc elements 11, 21 can be provided as a single part or in two separate parts, corresponding to the respective branches 11a, 11b and 21a, 21b. Conveniently, moreover, a spring element 29 can be provided between the two ends 21a and 21b to limit the moving away of the branches of the second arc element 21.

The arc elements 11, 21 act as a guide for an extendable element of elongated shape, more particularly a cable or a rope 7. As a guide, a tubular sheath can be provided, arranged around the arc elements 11,21, running externally or internally thereto, inside of which the cable 7 is slidable. The provision of the extendable element or cable 7 makes it possible to widen the arc elements even to a considerable extent in order to position them on the sides of the wheel in a pre-assembled condition. By applying tension to the cable 7, the arc elements are in turn tensioned in order to attach to the wheel.

In order to tension both arc elements, the extendable cable 7 is arranged in the manner described here below. One end of the cable 7 is fixed in a point of the first branch 11a of the first arc element 11 and is made to slide along it as far as the first end 12a, where it meets the first gap 18. The cable goes beyond the first gap 18 to reach the second branch 11b entering from the second end 12b of the first arc 11. Having travelled along the entire branch 11b, the cable 7 reaches the bridge element 4 from which it is directed towards the first branch 21a of the second arc element 21. After having run along the full length of the first branch 21a as far as the end 22a, the cable 7 goes beyond the second gap 28 and enters the second branch 21b from the end 22b. Once in the second branch 21b, the cable 7 travels along a length thereof until it is collected by a tensioning device or tensioner 30, suitable for tensioning the cable 7 and in this way bringing the arc elements 11 and 21 into a closed condition, bringing back together the ends 12a and 12b, 22a and 22b when the anti-skid device is mounted on the wheel. In a preferred embodiment, this tensioning device 30 is placed in a substantially central position of the second branch 21b.

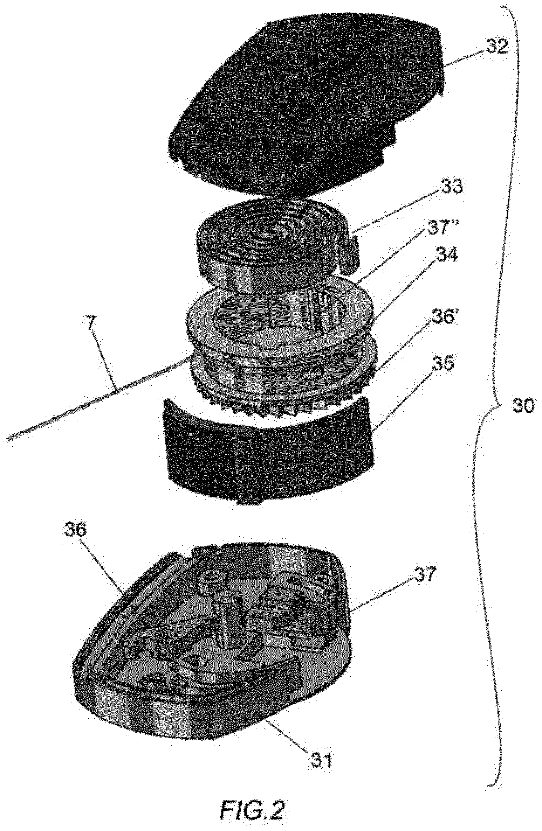

In order to carry out the desired tensioning, the tensioning device 30 has an internal structure such as that shown in Fig. 2, showing in an exploded view the various parts which make it up. The tensioning device, which can be considered functionally in itself known, is formed by a base 31 in which is housed a pulley 34 provided with external teeth around which the extendable cable 7 is wound. The external teeth 36' of the pulley 34 are apt to engage with a first non-return pawl 36 and a second non-return element 37 is apt to engage with internal teeth 37' of the pulley, functioning as a sort of double ratchet drive. When the pawl 36 is brought into engagement with the corresponding teeth 36', in fact, the pulley is only allowed to rotate in one direction, (the clockwise one with reference to the drawings), movement in the opposite direction being prevented. In this way, the pawl 36 has a non-return function, allowing only the winding of the cable and not its unwinding.

Similarly, although in a different form, the non-return element 37, engaging with the corresponding teeth 37', allows the pulley 34 to rotate only in one direction, opposite to that allowed by the pawl 36. Preferably, therefore, the non-return element 37 allows rotation only in an anticlockwise direction, allowing the unwinding of the cable 7.

In operation, i.e. when the tensioning device 30 is applied to the anti-skid device 1, the non-return element 37 can be brought into engagement with the toothed pulley 34 to allow distancing of the ends of the flexible arc elements 11 and 21, with consequent extension of the cable 7. This movement is caused manually by physically pushing the ends of the flexible elements apart.

The winding of the cable 7 around the pulley takes place instead due to the return force of a spiral spring 33 mounted integrally to the pulley 34. When the cable 7 is in an extended position, the spiral spring 33 generates a return force which tends to bring it back into the originally wound position. Rewinding of the cable is prevented as long as the non-return element 37 is engaged with the teeth 37' of the pulley 34. When this element 37 is disengaged, the pulley can rotate in a clockwise direction, allowing the cable to be rewound and bringing the arc elements 11 and 21 into closure, this rotation not being prevented by the pawl 36 given what is mentioned above.

For this purpose, the tensioning device 30 is provided with a selector 35 in order to move the pawl 36 and the non-return element 37, alternately, from the engagement position to the disengagement position. In a condition of use, the elements just described are contained in the base 31 and covered by a closure cover 32.

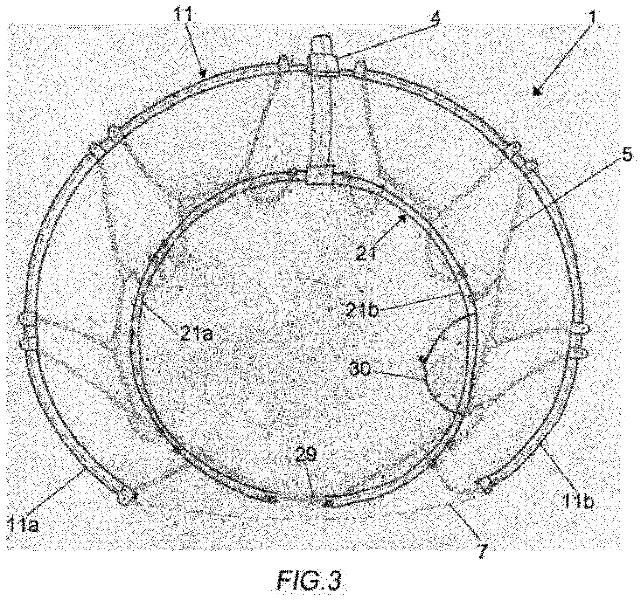

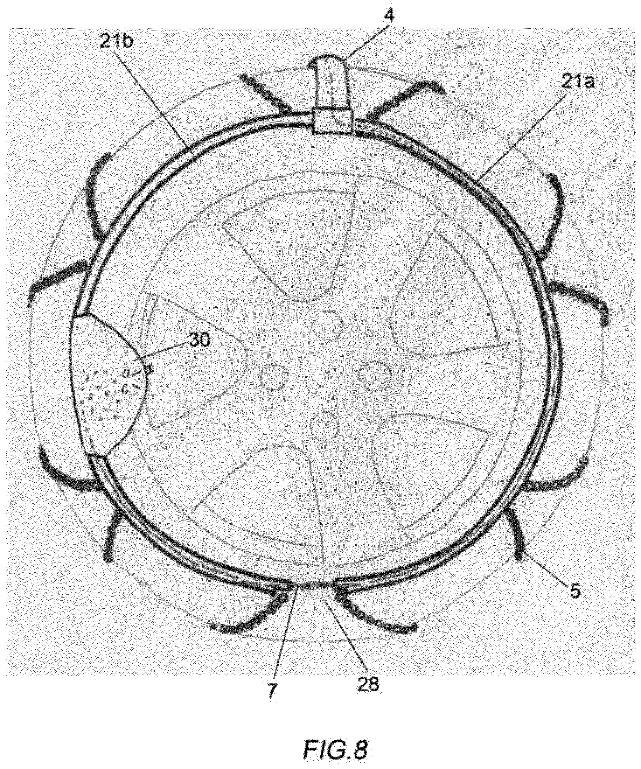

An anti-skid device 1 as just described is thus capable of being mounted on a wheel in a simple and direct manner. Referring to Figures 3 to 8, a sequence of actions to be carried out for successful mounting of the device is now described.

Starting with the device in unassembled condition, the ends of the first arc element 11 are distanced so as to widen the branches 11a, 11b (Fig. 3). The operation of widening of the branches of the arc element 11 causes the gap 18 to be of a greater width and the cable 7 to be very loosened.

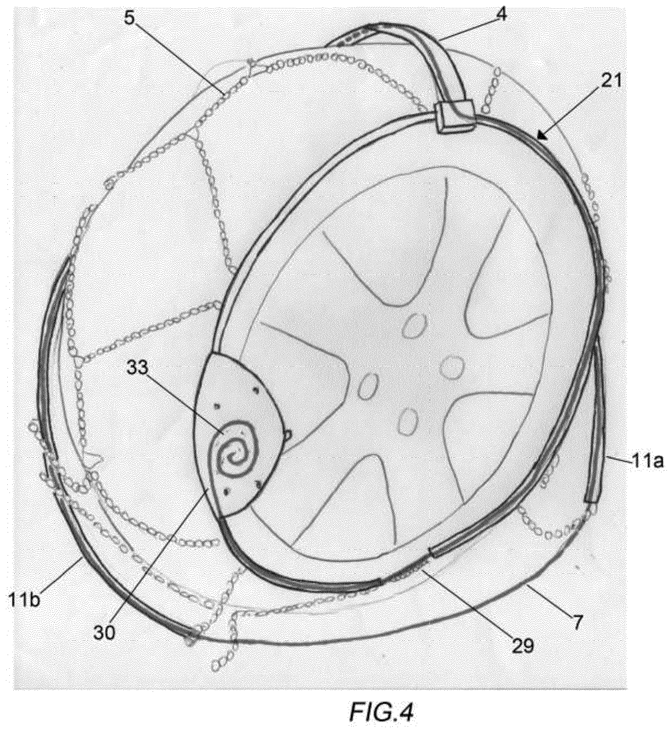

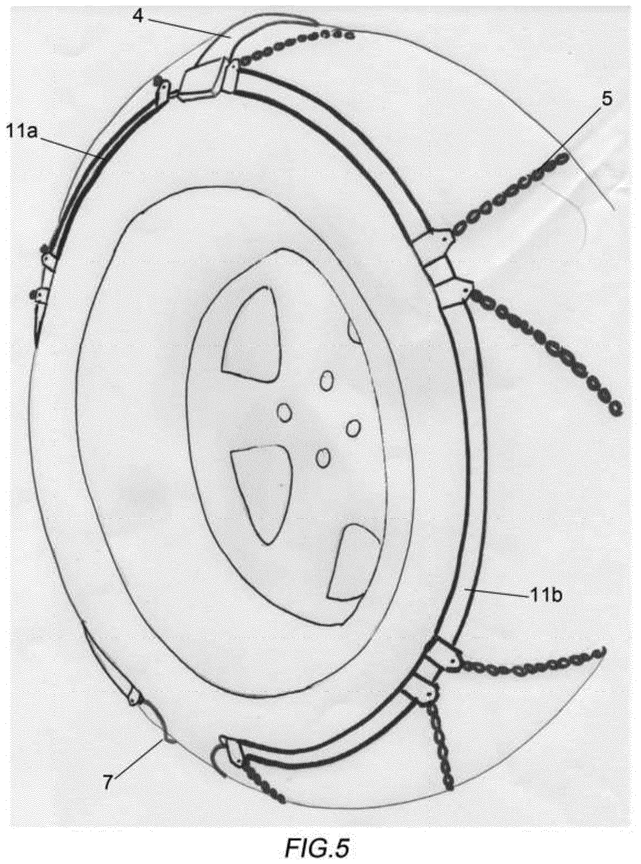

In this condition, the device 1 can at this point be "fitted" on the wheel, with the first arc element 11 made to pass over the wheel so as to be on its inner side, i.e. the side turned towards the axis of the vehicle. The situation is the one shown in Fig. 4, with the mesh 5 arranged on the tread and the second arc element 21 arranged on the outer side of the wheel, more particularly on the sides of the tyre. The branches of the first arc element 11 are still in a widened position and a portion of cable 7 in the gap 18 of the first arc element 11 is located on the outer side of the wheel. At the end of the assembly operation, pushing the first arc element 11 towards the internal part of the wheel, the situation is the one shown in Fig. 5 with part of the cable 7 still on the outside of the wheel.

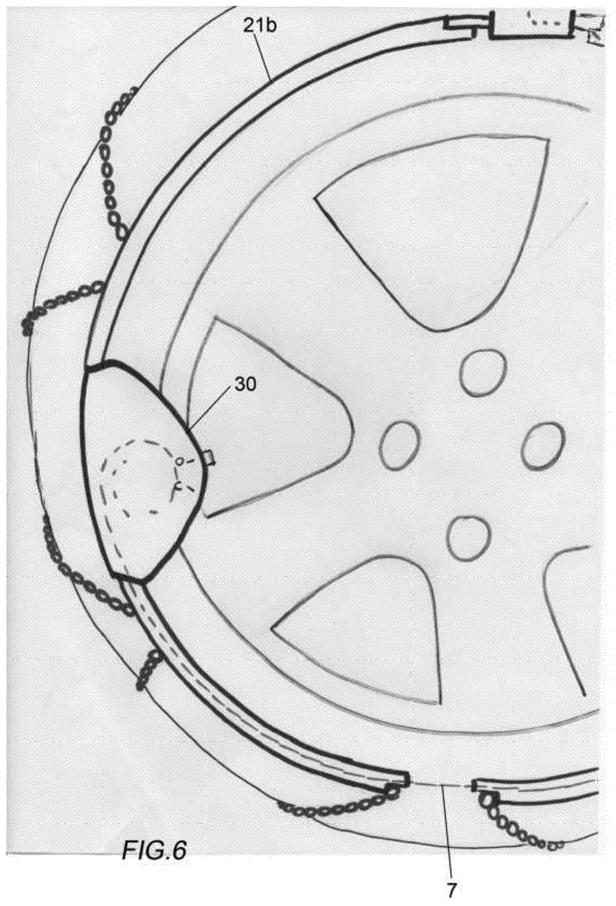

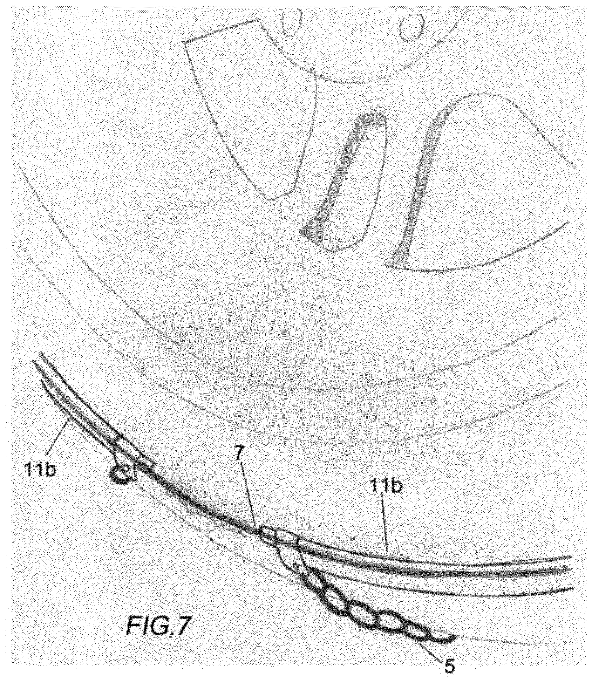

After having mounted the chain, it is sufficient to act on the tensioning device 30, selecting the closure position in order to activate the tensioning (Fig. 6). The tensioning device 30 draws in cable 7 making the first arc element 11 tighten on the inner side of the wheel (Fig. 7).

At this point the chain is now in a practically mounted condition. When the vehicle is started for the first time, the cable will move from the outer to the inner side of the wheel, fully tensioning the device and therefore fixing the arc elements 11 and 21 to the tyre sides. In this way, a quick and automatic mounting of the snow chain is carried out. From what is disclosed above, the advantages of the anti-skid device according to the invention appear clear. More particularly, in the embodiment of the arc elements in a single part, these are substantially rigid, but endowed with a certain flexibility, so as to allow an extremely easy and secure mounting on the tyre, avoiding rubbing with the rim, since there are practically no parts in contact with the same.

The present invention is not limited to the particular embodiment previously described and illustrated in the accompanying drawings, but numerous detailed changes may be made thereto, within the reach of the person skilled in the art, without thereby departing from the scope of the invention as defined in the appended claims.

### List of reference numerals

- 1:: anti-skid device
- 4:: bridge element
- 5:: mesh of chain sections
- 7:: extendable element
- 11:: first flexible arc element
- 11a, 11b:: first and second branches of the first arc element
- 12a, 12b:: ends of the first arc element
- 18:: gap of the first arc element
- 21:: second flexible arc element
- 21a, 21b:: first and second branches of the second arc element
- 22a, 22b:: ends of the second arc element
- 28:: gap of the second arc element
- 29:: spring element
- 30:: tensioning device
- 31:: base of the tensioning device
- 32:: cover of the tensioning device
- 33:: spiral spring
- 34:: toothed pulley
- 35:: selector
- 36:: first non-return pawl
- 37:: second non-return element
- 36':: outer teeth of the pulley
- 37':: internal teeth of the pulley

## Claims

1. Anti-skid device (1) for a wheel of a vehicle, comprising:
- a first arc element (11) apt to be mounted at a first side of said wheel, whose ends (12a, 12b) define a first gap (18);
- a second arc element (21) apt to be mounted at a second side of said wheel, whose ends (22a, 22b) define a second gap (28);
- a bridge element (4) apt to connect said first and second arc elements (11, 21) in such a way as to distance them on planes substantially parallel one to the other, with the gaps (18, 28) arranged with substantially identical radial orientation;
- an anti-skid element (5) between the first and second arc elements (11, 21) apt, in a mounted condition of the device (1), to be arranged on the surface of the tread of said wheel;
wherein the arrangement of said bridge element (4) divides the first arc element (11) into a first branch (11a) and into a second branch (11b) and the second arc element (21) into a first branch (21a) and into a second branch (21b);
**characterised in that**
an extendable cable (7) having a first and a second end is provided;
the first end of said cable (7) is fixed in a point of the first branch (11a) of the first arc element (2);
the cable (7) goes beyond the first gap (18), follows the entire length of the second branch (11b) of the first arc element (11) and via said bridge element (4) reaches the second arc element (21); it travels the entire length of the second branch (21a) of the second arc element (21), goes beyond the second gap (28) and reaches a tensioning device (30) provided in a position of the second branch (21b), at which it is fixed with its second end;
said tensioning device (30) being apt to tension the extendable cable (7) once the anti-skid device (1) has been mounted on the wheel, reducing said first and second gaps (18, 28) in order to fix said arc elements (11, 21) on the inner and outer sides of the wheel, placing itself on the sides of the tyre.

2. Anti-skid device (1) according to claim 1, wherein said cable (7) runs internally or externally to said arc elements (11, 21).

3. Anti-skid device (1) according to claim 2, wherein said cable (7) runs in tubular sheaths.

4. Anti-skid device (1) according to any one of the preceding claims, wherein each of said arc elements (11, 21) is made in a single part or in two separate branches (11a, 11b; 21a, 21b).

5. Anti-skid device (1) according to any one of the preceding claims, wherein said arc elements (11, 21) are made of steel.

6. Anti-skid device (1) according to any one of the preceding claims, wherein a spring element (29) is placed in said gap (28) between the ends (22a, 22b) of the second arc element (21) in order to keep the arc open during the mounting operations.

7. Anti-skid device (1) according to any one of the preceding claims, wherein said anti-skid element (5) is a mesh of chain sections.

8. Anti-skid device (1) according to any one of the preceding claims, wherein said tensioning device (30) comprises a toothed pulley (34) around which the cable (7) winds and unwinds, a spiral spring (33) being associated with said pulley (34) in order to return the cable (7) into a winding position.

9. Anti-skid device (1) according to claim 6, further comprising a non-return pawl (36) apt to form a ratchet drive with said toothed pulley (34), allowing, when engaged, the rotation of the pulley (34) in the direction of winding the cable and blocking its rotation in the opposite direction.

## Patentansprüche

1. Antirutschvorrichtung (1) für ein Rad eines Fahrzeugs, umfassend:
- ein erstes Bogenelement (11), das geeignet ist, an einer ersten Seite des Rades montiert zu werden, dessen Enden (12a, 12b) einen ersten Spalt (18) definieren;
- ein zweites Bogenelement (21), das geeignet ist, an einer zweiten Seite des Rades montiert zu werden, dessen Enden (22a, 22b) einen zweiten Spalt (28) definieren;
- ein Überbrückungselement (4), das geeignet ist, das erste und das zweite Bogenelement (11, 21) so zu verbinden, dass sie auf im Wesentlichen parallel zueinander verlaufenden Ebenen beabstandet sind, wobei die Spalten (18, 28) mit im Wesentlichen identischer radialer Ausrichtung angeordnet sind;
- ein Antirutschelement (5) zwischen dem ersten und dem zweiten Bogenelement (11, 21), das in einem montierten Zustand der Vorrichtung (1) geeignet ist, auf der Oberfläche der Lauffläche des Rades angeordnet zu sein;
wobei die Anordnung des Überbrückungselements (4) das erste Bogenelement (11) in einen ersten Schenkel (11a) und in einen zweiten Schenkel (11b) und das zweite Bogenelement (21) in einen ersten Schenkel (21a) und in einen zweiten Schenkel (21b) teilt;
**dadurch gekennzeichnet, dass**
ein ausziehbares Kabel (7) mit einem ersten und einem zweiten Ende bereitgestellt ist; das erste Ende des Kabels (7) an einem Punkt des ersten Schenkels (11a) des ersten Bogenelements (2) befestigt ist;
das Kabel (7) über den ersten Spalt (18) hinausgeht, der gesamten Länge des zweiten Schenkels (11b) des ersten Bogenelements (11) folgt und über das Überbrückungselement (4) zum zweiten Bogenelement (21) gelangt; es der gesamten Länge des zweiten Schenkels (21a) des zweiten Bogenelementes (21) folgt, über den zweiten Spalt (28) hinausgeht und eine Spannvorrichtung (30) erreicht, die in einer Position des zweiten Schenkels (21b) vorgesehen ist, an der es mit seinem zweiten Ende befestigt ist;
wobei die Spannvorrichtung (30) geeignet ist, das ausziehbare Kabel (7) zu spannen, sobald die Antirutschvorrichtung (1) auf dem Rad montiert wurde, wodurch der erste und der zweite Spalt (18, 28) verringert werden, um die Bogenelemente (11, 21) an der Innen- und Außenseite des Rades zu befestigen, wobei sie sich an den Seiten des Reifens anordnet.

2. Antirutschvorrichtung (1) nach Anspruch 1, wobei das Kabel (7) innen oder außen zu den Bogenelementen (11, 21) verläuft.

3. Antirutschvorrichtung (1) nach Anspruch 2, wobei das Kabel (7) in rohrförmigen Hüllen verläuft.

4. Antirutschvorrichtung (1) nach einem der vorhergehenden Ansprüche, wobei jedes der Bogenelemente (11, 21) einteilig oder in zwei getrennten Schenkeln (11a, 11b; 21a, 21b) ausgeführt ist.

5. Antirutschvorrichtung (1) nach einem der vorhergehenden Ansprüche, wobei die Bogenelemente (11, 21) aus Stahl hergestellt sind.

6. Antirutschvorrichtung (1) nach einem der vorhergehenden Ansprüche, wobei ein Federelement (29) in dem Spalt (28) zwischen den Enden (22a, 22b) des zweiten Bogenelements (21) angeordnet ist, um den Bogen während der Montagearbeiten offen zu halten.

7. Antirutschvorrichtung (1) nach einem der vorhergehenden Ansprüche, wobei das Antirutschelement (5) ein Netz aus Kettenabschnitten ist.

8. Antirutschvorrichtung (1) nach einem der vorhergehenden Ansprüche, wobei die Spannvorrichtung (30) eine Zahnscheibe (34) umfasst, um die sich das Seil (7) windet und abwickelt, wobei der Zahnscheibe (34) eine Spiralfeder (33) zugeordnet ist, um das Kabel (7) in eine Aufwickelposition zurückzubringen.

9. Antirutschvorrichtung (1) nach Anspruch 6, ferner umfassend eine Rückschlagsperrklinke (36), die geeignet ist, mit der Zahnscheibe (34) einen Ratschenantrieb zu bilden, der im Eingriff die Drehung der Zahnscheibe (34) in Aufwickelrichtung des Kabels und in der entgegengesetzten Richtung die Blockierung ihrer Drehung ermöglicht.

## Revendications

1. Dispositif antidérapage pour roues (1) pour une roue d'un véhicule, comprenant :
un premier élément arqué (11) apte à être monté d'un premier côté de ladite roue et dont les extrémités (12a, 12b) définissent un premier intervalle (18) ;
un second élément arqué (21) apte à être monté d'un second côté de ladite roue et dont les extrémités (22a, 22b) définissent un second intervalle (28) ;
un élément pont (4) apte à connecter lesdits premier et second éléments arqués (11, 21) de manière à les espacer sur des plans substantiellement parallèles l'un à l'autre, les intervalles (18, 28) étant disposés avec une orientation radiale substantiellement identique ;
un élément antidérapage (5) entre les premier et second éléments arqués (11, 21) apte, en état monté du dispositif (1), à être disposé sur la surface de la bande de roulement de ladite roue ;
l'agencement dudit élément pont (4) divisant le premier élément arqué (11) en une première branche (11a) et en une seconde branche (11b) et le second élément arqué (21) en une première branche (21a) et en une seconde branche (21b),
**caractérisé en ce**
**qu'**un câble extensible (7) doté d'une première et d'une seconde extrémité est prévu ;
**que** la première extrémité dudit câble (7) est fixée à un point de la première branche (11a) du premier élément arqué (2) ;
**que** le câble (7) va au-delà du premier intervalle (18), suit toute la longueur de la seconde branche (11b) du premier élément arqué (11) et, par l'intermédiaire dudit élément pont (4), atteint le second élément arqué (21) ; qu'il parcourt toute la longueur de la seconde branche (21a) du second élément arqué (21), va au-delà du second intervalle (28) et atteint un dispositif de tension (30) prévu à une position de la seconde branche (21b) à laquelle il est fixé par sa seconde extrémité ;
**que** ledit dispositif de tension (30) est apte à tendre le câble extensible (7) une fois que le dispositif antidérapage (1) a été monté sur la roue, en réduisant lesdits premier et second intervalles (18, 28) afin de fixer lesdits éléments arqués (11, 21) sur les côtés intérieur et extérieur de la roue en se plaçant lui-même sur les côtés du pneu.

2. Dispositif antidérapage (1) selon la revendication 1, dans lequel ledit câble (7) passe par l'intérieur ou par l'extérieur jusqu'auxdits éléments arqués (11, 21).

3. Dispositif antidérapage (1) selon la revendication 2, dans lequel ledit câble (7) passe dans des gaines tubulaires.

4. Dispositif antidérapage (1) selon l'une quelconque des revendications précédentes, dans lequel chacun desdits éléments arqués (11,21) est réalisé en une seule pièce ou en deux branches séparées (11a, 11b ; 21a, 21b).

5. Dispositif antidérapage (1) selon l'une quelconque des revendications précédentes, dans lequel lesdits éléments arqués (11, 21) sont composés d'acier.

6. Dispositif antidérapage (1) selon l'une quelconque des revendications précédentes, dans lequel un élément à ressort (29) est placé dans ledit intervalle (28) entre les extrémités (22a, 22b) du second élément arqué (21) afin de maintenir l'arc ouvert pendant les opérations de montage.

7. Dispositif antidérapage (1) selon l'une quelconque des revendications précédentes, dans lequel ledit élément antidérapage (5) est un maillon de sections de chaîne.

8. Dispositif antidérapage (1) selon l'une quelconque des revendications précédentes, dans lequel ledit dispositif de tension (30) comprend une poulie dentée (34) autour de laquelle le câble (7) s'enroule et se déroule, un ressort à spirale (33) étant associé à ladite poulie (34) afin de ramener le câble (7) dans une position d'enroulement.

9. Dispositif antidérapage (1) selon la revendication 6, comprenant en outre un cliquet antiretour (36) apte à former un entraînement à cliquet avec ladite poulie dentée (34) en permettant, une fois engagé, la rotation de la poulie (34) dans le sens d'enroulement du câble et bloquant sa rotation dans le sens opposé.
